# EUROPÄISCHE PATENTSCHRIFT

(11) **EP 2 604 986 B1**
(45) Veröffentlichungstag und Bekanntmachung des Hinweises auf die Patenterteilung: **11.08.2021**
(21) Anmeldenummer: 12007984.3
(22) Anmeldetag: 28.11.2012
(51) Int. Cl.: G01F 23/02, G01F 23/70, G01F 23/74

(54) **Vorrichtung zum Anzeigen der Höhe des Füllstandes von Fluiden**
Device for displaying the height of the fill level of fluids
Dispositif d'affichage de la hauteur du niveau de remplissage de fluides

(30) Priorität: 16.12.2011 DE 102011121529
(43) Veröffentlichungstag der Anmeldung: 19.06.2013
(73) Patentinhaber: HYDAC Accessories GmbH, 66280 Sulzbach/Saar (DE)
(72) Erfinder: Jürgen, Käfer, 66578 Schiffweiler (DE)
(74) Vertreter: Bartels und Partner, Patentanwälte

(56) Entgegenhaltungen:
- EP-A1- 1 154 245
- EP-A1- 2 256 469
- DE-A1-102009 007 655
- DE-C- 356 843
- GB-A- 794 941
- US-B1- 6 988 406

## Beschreibung

Die Erfindung betrifft eine Vorrichtung zum Anzeigen der Höhe des Füllstandes von Fluiden mit den Merkmalen im Oberbegriff des Anspruchs 1.

Vorrichtungen dieser Art sind bekannt, vergleiche DE 10 2009 023 343 A1. Derartige Vorrichtungen dienen der Anzeige des Niveaus einer Flüssigkeit innerhalb eines Behälters, wobei die Vorrichtung außerhalb des Behälters angebracht, jedoch über mindestens einen Fluidanschluss mit diesem in der Art von kommunizierenden Röhren verbunden ist. Bei einer solchen Vorrichtung kann der jeweils aktuelle Füllstand optisch, beispielsweise durch visuelles Beobachten der Lage des innerhalb des Steigrohres sichtbaren Fluidpegels, erkannt werden, oder es kann, wie dies bei der bekannten, vorstehend genannten Vorrichtung der Fall ist, die Anzeige des Füllstandes durch Beobachten der Lage eines im Steigrohr bewegbaren Schwimmerkörpers gewonnen werden. Solche mit einem Schwimmerkörper versehene Vorrichtungen können auch für eine Füllstandskontrolle benutzt werden, indem eine Sensoreinrichtung vorgesehen ist, die die Position des Schwimmerkörpers innerhalb des Anzeigebereichs erkennt und bei einer vorgebbaren Position des Schwimmerkörpers ein elektrisches Signal erzeugt, aufgrund dessen die bei Erreichen des betreffenden Füllstands notwendigen Aktionen manuell oder automatisch vorgenommen werden.

Als Fluide, die mittels derartiger Vorrichtungen angezeigt und/oder kontrolliert werden sollen, kommen insbesondere Druckflüssigkeiten in Frage, wie Mineralöl, Kraftstoffe, Wasser-Öl-Emulsionen und synthetische Flüssigkeiten wie Hydraulikflüssigkeiten. Für die visuelle Anzeige des jeweils aktuellen Fluidpegels kann das Steigrohr als durchsichtiges Rohr, beispielsweise in Form eines Plexiglasrohres, ausgebildet sein.

Die EP 1 154 245 A1 offenbart eine Vorrichtung zum Anzeigen der Höhe des Füllstandes von Fluiden, mit mindestens einem Fluidanschluss der in ein Steigrohr mündet, dessen Wand zumindest innerhalb eines Anzeigebereichs eine visuelle Beobachtung der Lage des Fluidpegels ermöglicht, wobei zumindest ein Markierungskörper vorhanden ist, der außerhalb des Steigrohres, jedoch in visueller Zuordnung zum Anzeigebereich, in einer gewählten Position festlegbar ist, die einer vorgegebenen, zu markierenden Füllstandshöhe entspricht, wobei für den jeweiligen Markierungskörper eine Einstelleinrichtung vorhanden ist, mittels deren der jeweilige Markierungskörper in gewählte Positionen einstellbar und in diesen festlegbar ist, wobei die Einstelleinrichtung durch eine Verschiebeeinrichtung gebildet ist, mittels deren der zumindest eine Markierungskörper in gewählte Einstellpositionen verschiebbar ist, wobei die Vorrichtung ein Gehäuse aufweist und wobei die Verschiebeeinrichtung mindestens eine am Gehäuse befindliche, sich entlang zumindest eines Teils des Anzeigebereichs erstreckende Führungsbahn bildet, längs deren ein jeweiliger Markierungskörper zur Positionseinstellung verschiebbar und in ausgewählten Einstellpositionen festlegbar ist.

Die DE 356 843, die GB 794 941, das US 6 988 406 B1 und die EP 2 256 469 A1 offenbaren weitere Anzeigevorrichtungen.

Der Erfindung liegt die Aufgabe zugrunde, eine Vorrichtung der besagten Art zur Verfügung zu stellen, bei der sich die Anzeige an die bei unterschiedlichen Betriebsbedingungen gegebenen Bedürfnisse anpassen lässt. Erfindungsgemäß ist diese Aufgabe durch eine Vorrichtung gelöst, die die Merkmale des Patentanspruchs 1 in seiner Gesamtheit aufweist.

Nach dem kennzeichnenden Teil des Anspruchs 1 ist die erfindungsgemäße Vorrichtung dadurch gekennzeichnet, dass das Gehäuse das Steigrohr umgibt, dass eine Seitenwand des Gehäuses eine Abkantung aufweist, die eine von einer Frontwand des Gehäuses gegen Fluidanschlüsse hin versetzte Ebene bildet, an der die Führungsbahn ausgebildet ist, dass der jeweilige Markierungskörper ein Verbindungsteil, das an der betreffenden Seitenwand entlang der Führungsbahn in Form eines Längsschlitzes lageeinstell- und feststellbar ist, sowie ein vom Verbindungsteil abgewinkeltes Zeigerteil aufweist, das sich, zumindest einen Teil der Frontwand übergreifend, in den Bereich eines Sichtfensters erstreckt, und dass das Verbindungsteil eine Bohrung aufweist, die von einer Klemmschraube durchgriffen ist, die mit einer T-Mutter zusammenwirkt, die entlang des Längsschlitzes geführt ist und mittels der der jeweilige Markierungskörper in der gewünschten Einstellposition festlegbar ist.

Ferner ist vorgesehen, dass zumindest ein Markierungskörper vorhanden ist, der außerhalb des Steigrohres, jedoch in visueller Zuordnung zum Anzeigebereich, in einer gewählten Position festlegbar ist, die einer vorgegebenen, zu markierenden Füllstandshöhe entspricht. Durch Anbringen eines oder mehrerer Markierungskörper in gewählter Einstellposition lassen sich so Füllstandshöhen, die für die Betriebsbedingungen betreffender, der Vorrichtung zugehöriger Fluidsysteme wichtig oder kritisch sind, augenfällig markieren. Beispielsweise lassen sich so für den Betrieb des Fluidsystems einzuhaltende Minima oder Maxima des Füllstandes markieren, oder es können optimale Niveaubereiche zwischen zueinander versetzt angeordneten Markierungskörpern gekennzeichnet werden.

Ein Vorteil der erfindungsgemäßen Vorrichtung besteht auch darin, dass an bereits bestehenden Vorrichtungen, etwa in Form der in
DE 10 2009 023 343 A1 offenbarten Vorrichtung, nachträglich Markierungskörper nachgerüstet werden können.

Das Gehäuse weist eine Frontwand mit zumindest einer als Sichtfenster dienenden Unterbrechung und mindestens eine an die Frontwand angrenzende Seitenwand auf. Bei dem Markierungskörper kann es sich um ein abgewinkeltes Blechteil handeln, dessen einer Schenkel als Verbindungsteil flächig an der betreffenden Seitenwand anliegt und mittels eines mit der betreffenden Führungsbahn zusammenwirkenden Führungsteiles entlang der Führungsbahn verfahrbar und an dieser festlegbar ist, wobei der andere Schenkel den Rand der Frontwand übergreift und vorzugsweise in einer Zeigerspitze ausläuft, die in den Bereich des Sichtfensters ragt.

Bei Ausführungsbeispielen, bei denen im Steigrohr ein Schwimmerkörper bewegbar geführt ist und zumindest eine dessen Lage erkennende Sensoreinrichtung vorgesehen ist, kann diese, in entsprechender Weise wie jeweilige Markierungskörper, entlang der Führungsbahn einer jeweils betreffenden Seitenwand lageeinstell- und feststellbar sein.

Nachstehend ist die Erfindung anhand von in der Zeichnung dargestellten Ausführungsbeispielen im Einzelnen erläutert. Es zeigen:
- Fig. 1: eine gegenüber einer praktischen Ausführungsform leicht vergrößert gezeichnete perspektivische Schrägansicht der Vorrichtung;
- Fig. 2: eine annähernd in natürlicher Größe gezeichnete Seitenansicht der Vorrichtung aus Fig. 1;
- Fig. 3: eine der Fig. 1 ähnliche Darstellung der Vorrichtung;
- Fig. 4: eine den Fig. 1 und 3 ähnliche Darstellung der Vorrichtung;
- Fig. 5 und 6: vergrößert gezeichnete perspektivische Schrägansichten zweier Ausführungsformen von Markierungskörpern der Vorrichtung;
- Fig. 7 und 8: eine perspektivische Schrägansicht bzw. Vorderansicht eines Ausführungsbeispiels einer erfindungsgemäßen Vorrichtung;
- Fig. 9 und 10: eine perspektivische Schrägansicht bzw. Vorderansicht eines weiteren Ausführungsbeispiels und
- Fig. 11: eine Draufsicht des weiteren Ausführungsbeispiels.

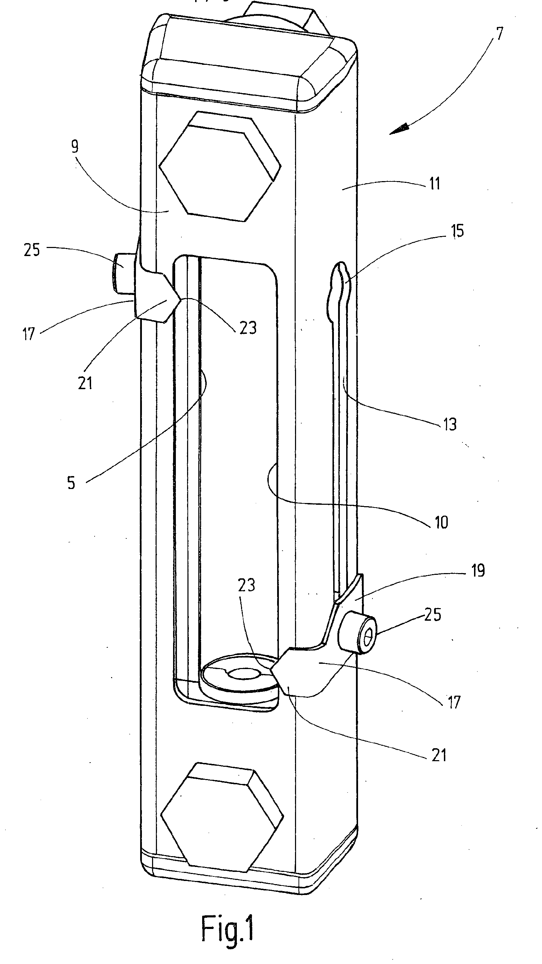

Die Ausführungsformen der Fig. 1 bis 6 dienen lediglich der Erläuterung des Hintergrundes der Erfindung und sind nicht Gegenstand eines Anspruches.

Die in der Zeichnung dargestellte Vorrichtung weist einen unteren Fluidanschluss 1 und einen oberen Fluidanschluss 3 auf, die mit einem Steigrohr 5 an dessen unterem Ende bzw. oberem Ende in Fluidverbindung sind. Das Steigrohr 5 besteht aus einem durchsichtigen Werkstoff wie Plexiglas. Das Steigrohr 5 ist von einem Gehäuse 7 umgeben, das vorzugsweise aus einem Aluminiumwerkstoff gefertigt ist und eine Frontwand 9 sowie sich beidseits anschließende Seitenwände 11 aufweist. In der Frontwand 9 befindet sich eine Aussparung, die ein sich über einen Anzeigebereich erstreckendes Sichtfenster 10 bildet, durch das die Position des Fluidpegels und damit die Füllstandshöhe durch das durchsichtige Steigrohr 5 hindurch visuell beobachtbar ist.

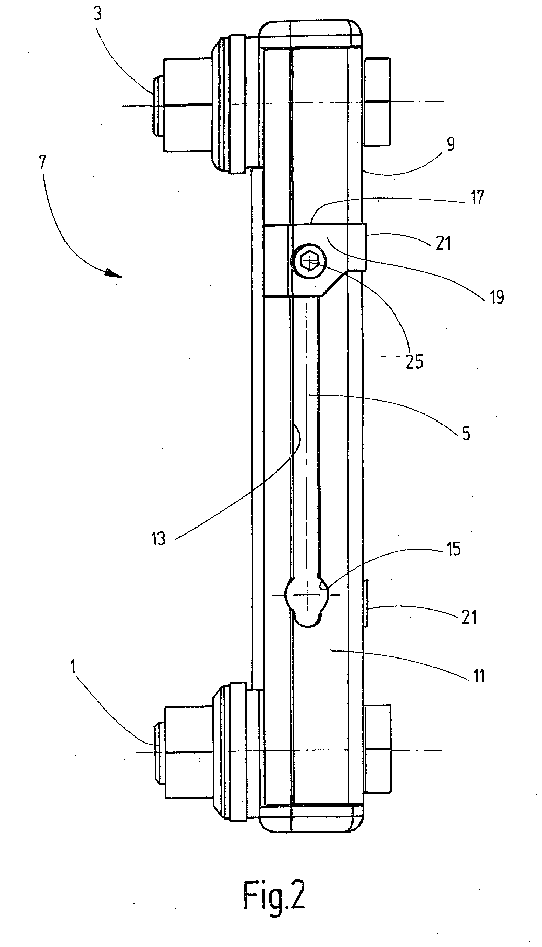

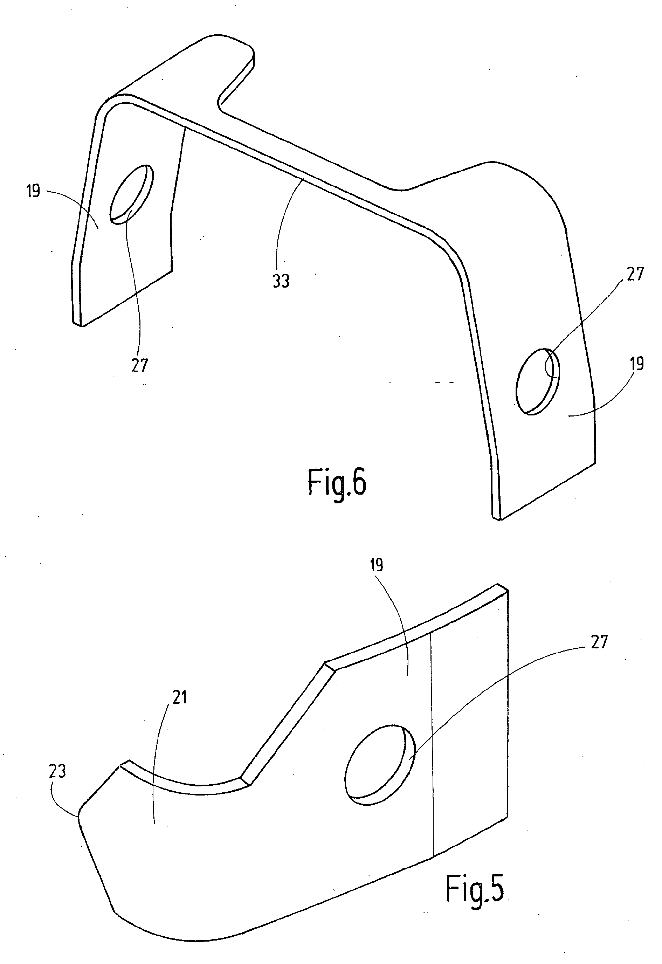

Beide Seitenwände 11 sind durch einen sich entlang der Hochachse erstreckenden Längsschlitz 13 durchbrochen, die endseitige Erweiterungen 15 aufweisen. Als Bestandteil einer Einstelleinrichtung für die Positionseinstellung von Markierungskörpern bilden die Längsschlitze 13 Führungsbahnen, längs deren Markierungskörper mittels einer Verschiebeeinrichtung stufenlos in Richtung der Hochachse lageveränderbar sind. Bei der Vorrichtung von Fig. 1 und 2 ist an beiden Seitenwänden 11 jeweils ein Markierungskörper 17 angeordnet, wobei sich ein an der rechtsseitigen Seitenwand 11 befindlicher Markierungskörper 17 in der Nähe des unteren Endes des Sichtfensters 10, d.h. am unteren Ende des Anzeigebereichs, befindet, um ein Minimum der Füllstandshöhe zu markieren, und der andere Markierungskörper 17 sich im Bereich des oberen Endes des Anzeigebereichs befindet. Die Markierungskörper 17 sind vorzugsweise als Biegeteil aus einem Metallblech gefertigt und weisen, wie am besten aus Fig. 5 zu ersehen ist, ein ebenflächiges Verbindungsteil 19 und ein davon abgebogenes, schmäleres Zeigerteil 21 auf. Das Verbindungsteil 19 ist, an der zugeordneten Seitenwand 11 anliegend, entlang des Längsschlitzes 13 in gewählte Anzeigepositionen verschiebbar. Das Zeigerteil 21 erstreckt sich, den Rand der Frontwand 9 übergreifend, bis in den Anzeigebereich des Sichtfensters 10 und endet in einer Zeigerspitze 23.

Als Bestandteil der Einstelleinrichtung für den jeweiligen Markierungskörper 17 weist eine Führungs- und Feststelleinrichtung eine Klemmschraube 25 auf, die eine Bohrung 27 im Verbindungsteil 19 durchgreift und mit einer T-Mutter (in der Zeichnung nicht sichtbar) zusammenwirkt, die an der Innenseite der jeweiligen Seitenwand 11 entlang des Längsschlitzes 13 geführt ist und den Markierungskörper 17 in der gewünschten Einstellposition sichert. Die Markierungskörper 17 können aus einem Metallblech gefertigt sein, jedoch auch aus Kunststoff hergestellt sein, der gegebenenfalls eingefärbt ist. Wenn es sich bei metallischem Werkstoff um ein Aluminiumblech handelt, kann dieses blank gelassen oder farbig eloxiert sein. Bei Herstellung aus einem Edelstahl kann eine farbliche Pulverbeschichtung vorgesehen sein. Durch farbige Unterscheidung, beispielsweise schwarz und rot, lassen sich kritische Füllstandshöhen augenfällig markieren, etwa Minima und Maxima.

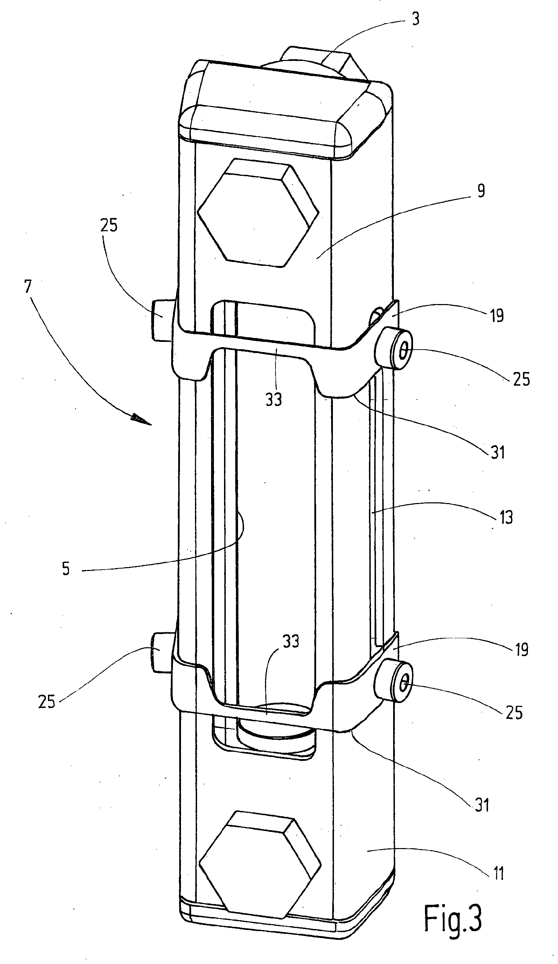

Die Vorrichtung gemäß Fig. 3 entspricht dem zuvor beschriebenen Beispiel, abgesehen davon, dass Markierungskörper 31 in einer in Fig. 6 gesondert dargestellten Bauform vorgesehen sind. Diese weisen zwei Verbindungsteile 19 für die Lageeinstellung und Festlegung an beiden Seitenwänden 11 des Gehäuses 7 auf. Als Zeigerteil ist eine schmale Leiste 13 vorgesehen, die die Verbindungsteile 19 miteinander verbindet und sich über den Anzeigebereich des Sichtfensters 10 erstreckt, siehe Fig. 3. Dadurch lassen sich die Grenzen eines zulässigen Bereichs von Füllstandshöhen besonders augenfällig markieren.

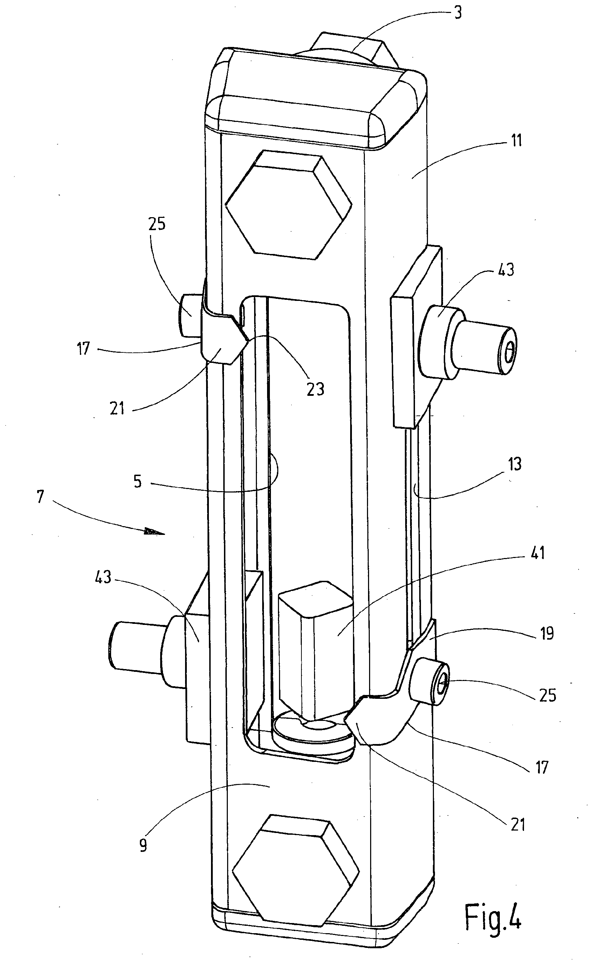

Die in Fig. 4 gezeigte Vorrichtung verdeutlicht, dass sich eine Ausführungsform auch in Verbindung mit einer Vorrichtung zur Füllstandskontrolle (FSK) verwirklichen lässt, wie sie in dem bereits erwähnten Dokument DE 10 2009 023 343 A1 offenbart ist, worauf Bezug genommen ist. Wie bei dieser Vorrichtung ist im Steigrohr 5 ein bewegbarer Schwimmerkörper 41 angeordnet, und es ist eine Sensoreinrichtung vorhanden, die die Position des Schwimmerkörpers 41 im Anzeigebereich des Steigrohres 5 erkennt und ein die Position kennzeichnendes Anzeigesignal liefert, das die Füllstandshöhe darstellt und benutzt werden kann, um Maßnahmen zur Korrektur oder Änderung des Füllstandes einzuleiten. Beim gezeigten Beispiel weist die Sensoreinrichtung Reed-Kontakte 43 auf, die elektrische Signale, ausgelöst durch magnetische Bestandteile des Schwimmerkörpers 41, erzeugen. Es versteht sich, dass anstelle von Reed-Kontakten 43 als Detektoren und Magneten als Auslöser geeignete andere Sensoreinrichtungen zur Positionserkennung angewendet werden könnten, beispielsweise photoelektrische Sensoreinrichtungen oder dergleichen.

Bei der vorliegenden Vorrichtung sind die Reed-Kontakte 43 entlang der durch die Längsschlitze 13 der Seitenwände 11 gebildeten Führungsbahnen ebenso lageeinstellbar und lagesicherbar angeordnet wie die Markierungskörper 17. Die diesbezügliche Ausgestaltung der Reed-Kontakte 43 und die Art ihrer Führung und Lagesicherung in den Längsschlitzen 13 sind aus dem bereits erwähnten Dokument DE 10 2009 023 343 A1 an sich bekannt, so dass hierauf nicht näher eingegangen werden muss.

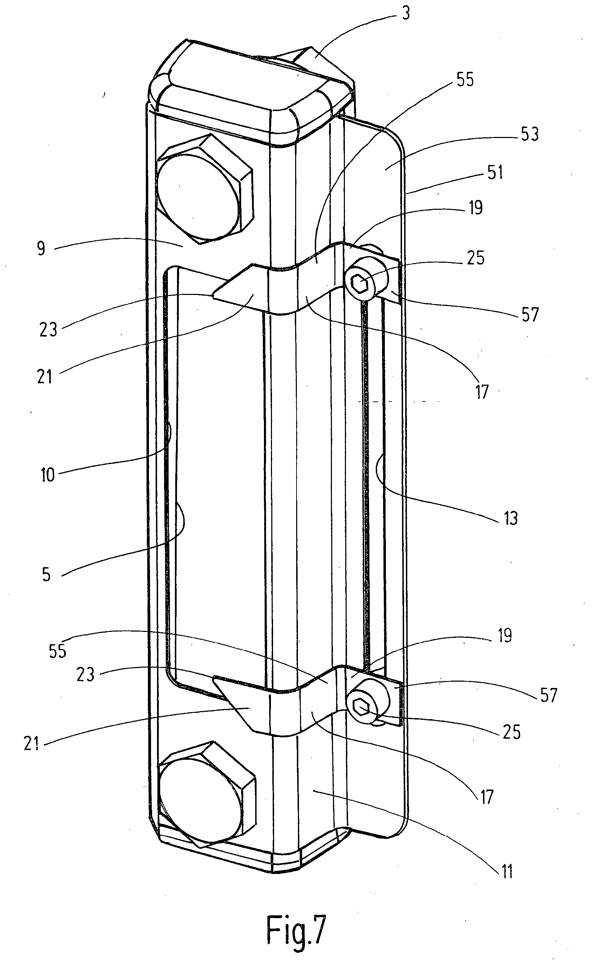

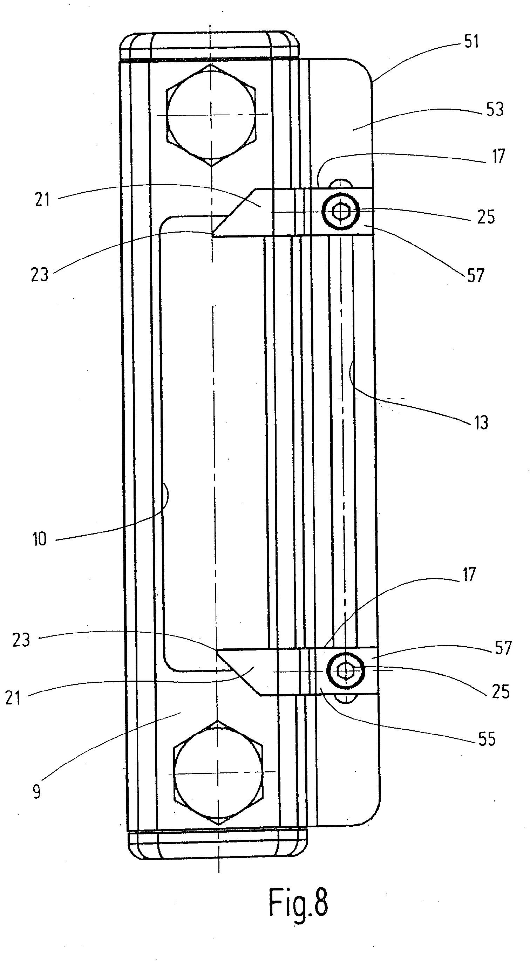

Das Ausführungsbeispiel der erfindungsgemäßen Vorrichtung von Fig. 7 und 8 unterscheidet sich von der vorherigen Vorrichtung insofern, als die Führungsbahn 13 nicht unmittelbar an einer Seitenwand 11 ausgebildet ist, sondern an einer Abkantung 51 des Randes einer Seitenwand 11. Diese Abkantung 51, die durch eine Verlängerung der Seitenwand 11 gebildet ist, ist derart abgewinkelt, dass sie eine Ebene 53 bildet, die von der Frontwand 9 gegen die Fluidanschlüsse 1, 3 hin versetzt ist und in der die Führungsbahn 13 ausgebildet ist, entlang deren betreffende Markierungskörper 17 lageeinstellbar sind. Bei diesem Ausführungsbeispiel weist das Verbindungsteil 19 des jeweiligen Markierungskörpers 17 außer dem an dessen Seitenwand 11 anliegenden Abschnitt 55 einen davon abgewinkelten Abschnitt 57 auf, der an der Ebene 53 der Führungsbahn 13 anliegt.

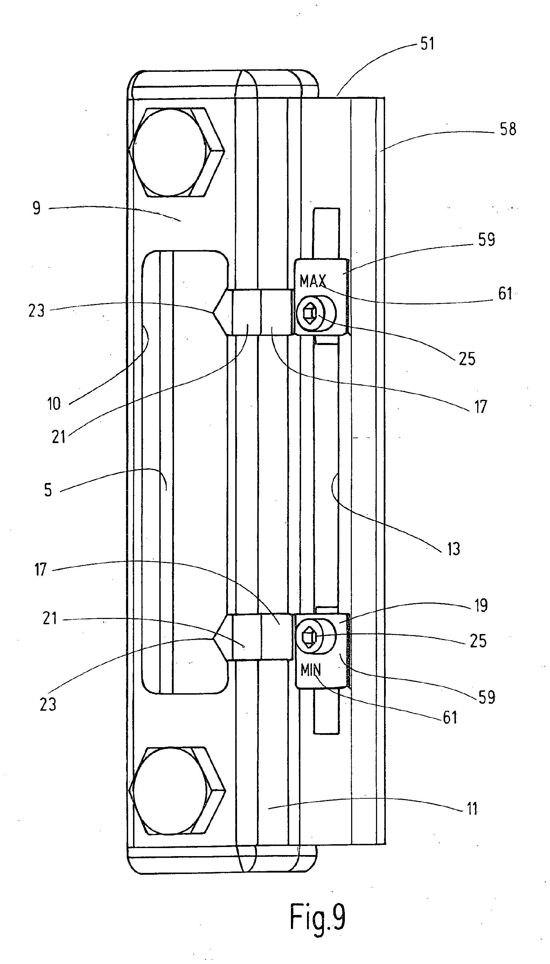

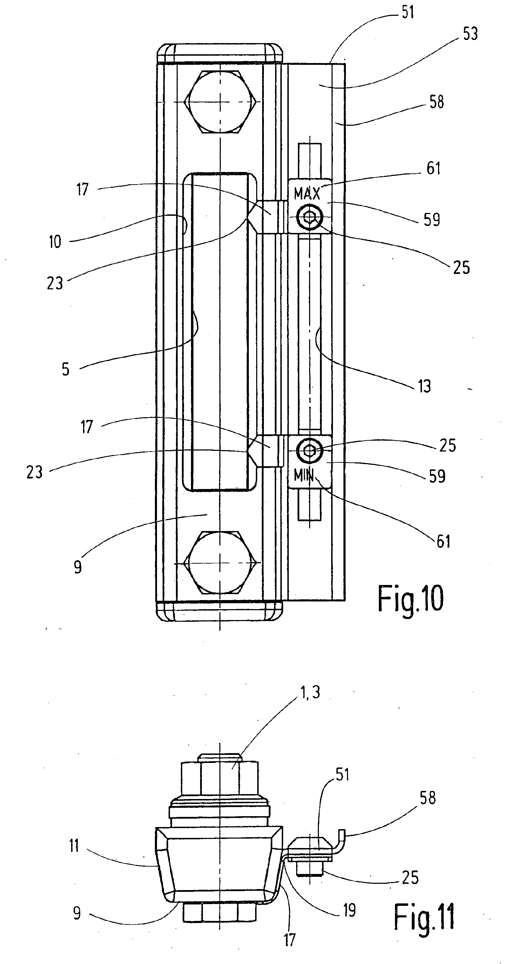

Das weitere Beispiel von Fig. 9 bis 11 unterscheidet sich vom Ausführungsbeispiel gemäß Fig. 7 und 8 insofern, als die Abkantung 51 der Seitenwand 11 einen sich neben der Führungsbahn 13 erstreckenden, weiter in Richtung gegen die Fluidanschlüsse 1, 3 hin abgewinkelten Rand 58 aufweist. Außerdem weist das Verbindungsteil 19 der Markierungskörper 17 einen Ansatz 59 auf, der gegenüber dem schmäleren Trägerteil 21 eine Verlängerung in Richtung der Führungsbahn 13 bildet und eine Fläche für das Aufbringen einer Füllstandsmarkierung 61 zur Verfügung stellt.

## Patentansprüche

1. Vorrichtung zum Anzeigen der Höhe des Füllstandes von Fluiden, mit mindestens einem Fluidanschluss (1, 3) der in ein Steigrohr (5) mündet, dessen Wand zumindest innerhalb eines Anzeigebereichs eine visuelle Beobachtung der Lage des Fluidpegels ermöglicht, wobei zumindest ein Markierungskörper (17, 31) vorhanden ist, der außerhalb des Steigrohres (5), jedoch in visueller Zuordnung zum Anzeigebereich, in einer gewählten Position festlegbar ist, die einer vorgegebenen, zu markierenden Füllstandshöhe entspricht, wobei für den jeweiligen Markierungskörper (17, 31) eine Einstelleinrichtung (13, 25) vorhanden ist, mittels deren der jeweilige Markierungskörper (17, 31) in gewählte Positionen einstellbar und in diesen festlegbar ist, wobei die Einstelleinrichtung durch eine Verschiebeeinrichtung (13, 25) gebildet ist, mittels deren der zumindest eine Markierungskörper (17, 31) in gewählte Einstellpositionen verschiebbar ist, wobei die Vorrichtung ein Gehäuse (7) aufweist und wobei die Verschiebeeinrichtung (13, 25) mindestens eine am Gehäuse (7) befindliche, sich entlang zumindest eines Teils des Anzeigebereichs erstreckende Führungsbahn (13) bildet, längs deren ein jeweiliger Markierungskörper (17, 31) zur Positionseinstellung verschiebbar und in ausgewählten Einstellpositionen festlegbar ist, **dadurch gekennzeichnet, dass** das Gehäuse (7) das Steigrohr (5) umgibt, dass eine Seitenwand (11) des Gehäuses (7) eine Abkantung (51) aufweist, die eine von einer Frontwand (9) des Gehäuses (7) gegen Fluidanschlüsse (1, 3) hin versetzte Ebene (53) bildet, an der die Führungsbahn (13) ausgebildet ist, dass der jeweilige Markierungskörper (17, 31) ein Verbindungsteil (19), das an der betreffenden Seitenwand (11) entlang der Führungsbahn (13) in Form eines Längsschlitzes lageeinstell- und feststellbar ist, sowie ein vom Verbindungsteil (19) abgewinkeltes Zeigerteil (21, 33) aufweist, das sich, zumindest einen Teil der Frontwand (9) übergreifend, in den Bereich eines Sichtfensters (10) erstreckt, und dass das Verbindungsteil (19) eine Bohrung (27) aufweist, die von einer Klemmschraube (25) durchgriffen ist, die mit einer T-Mutter zusammenwirkt, die entlang des Längsschlitzes (13) geführt ist und mittels der der jeweilige Markierungskörper (17) in der gewünschten Einstellposition festlegbar ist.

2. Vorrichtung nach Anspruch 1, **dadurch gekennzeichnet, dass** die Abkantung (51) einen sich neben der Führungsbahn (13) erstreckenden, weiter in Richtung gegen die Fluidanschlüsse (1, 3) hin abgewinkelten Rand (58) aufweist.

3. Vorrichtung nach Anspruch 1 oder 2, **dadurch gekennzeichnet, dass** das Verbindungsteil (19) des jeweiligen Markierungskörpers (17) einen an der zugeordneten Seitenwand (11) anliegenden Abschnitt (55) und einen davon abgewinkelten, an der Ebene (53) der Führungsbahn (13) anliegenden Abschnitt (57) aufweist.

4. Vorrichtung nach einem der vorstehenden Ansprüche, **dadurch gekennzeichnet, dass** im Steigrohr (5) ein Schwimmerkörper (41) bewegbar geführt ist und dass zumindest eine dessen Lage erkennende Sensoreinrichtung (43) vorgesehen ist, die entlang der Führungsbahn (13) einer jeweiligen Seitenwand (11) lageeinstell- und feststellbar ist.

## Claims

1. Device for indicating the level of fluids, having at least one fluid connection (1, 3) which opens out into a riser tube (5), the wall of which enables visual observation of the position of the fluid level at least within a display area, wherein at least one marking body (17, 31) is available, which can be fixed outside the riser tube (5), but in visual association with the display area, in a selected position which corresponds to a predetermined fill level to be marked, wherein a setting device (13, 25) is available for the respective marking body (17, 31), by means of which the respective marking body (17, 31) can be adjusted into selected positions and fixed therein, wherein the setting device is formed by a displacement device (13, 25), by means of which the at least one marking body (17, 31) can be displaced into selected setting positions, wherein the device has a housing (7) and wherein the displacement device (13, 25) forms at least one guideway (13) located on the housing (7), extending along at least one part of the display area, along which guideway a respective marking body (17, 31) can be displaced for position adjustment and can be fixed in selected setting positions, **characterised in that** the housing (7) surrounds the riser tube (5), **in that** a side wall (11) of the housing (7) has a bend (51) which forms a plane (53) that is offset from a front wall (9) of the housing (7) towards fluid connections (1, 3), on which plane the guideway (13) is formed, **in that** the respective marking body (17, 31) has a connecting part (19) which can be positionally adjusted and fixed on the relevant side wall (11) along the guideway (13) in the form of a longitudinal slot, and a pointer part (21, 33) which is angled away from the connecting part (19) and extends, overlapping at least a portion of the front wall (9), into the area of a viewing window (10), and **in that** the connecting part (19) has a hole (27) which is penetrated by a clamping bolt (25) that cooperates with a T-nut which is guided along the longitudinal slot (13) and by means of which the respective marking body (17) can be fixed in the desired setting position.

2. Device according to claim 1, **characterised in that** the bend (51) has an edge (58) extending adjacent to the guideway (13) and further angled in the direction towards the fluid connections (1, 3).

3. Device according to claim 1 or 2, **characterised in that** the connecting part (19) of the respective marking body (17) has a section (55) abutting on the associated side wall (11) and a section (57) angled away therefrom, abutting on the plane (53) of the guideway (13).

4. Device according to one of the preceding claims, **characterised in that** a float body (41) is movably guided in the riser tube (5) and **in that** at least one sensor device (43) which detects the position of said float body is provided, and the sensor device is positionally adjustable and can be fixed along the guideway (13) of a respective side wall (11).

## Revendications

1. Installation d'affichage de la hauteur du niveau de remplissage de fluides, comprenant au moins un raccord, qui débouche dans un tuyau (5) montant, dont la paroi rend possible, au moins dans une plage d'affichage, une observation visuelle de la position du niveau de fluide, dans lequel il est prévu au moins une pièce (17, 31) de repérage qui peut être, à l'extérieur du tuyau (5) montant, mais toutefois en association visuelle à la plage d'affichage, fixée dans une position sélectionnée, qui correspond à une hauteur de niveau de remplissage donnée à l'avance, à repérer, dans laquelle il y a pour la pièce (17, 31) respective de repérage, un dispositif (13, 25) de réglage, au moyen duquel la pièce (17, 31) respective de repérage peut être mise dans des positions sélectionnées et y être fixée, dans laquelle le dispositif de réglage est formé par un dispositif (13, 25) de déplacement, au moyen duquel la au moins une pièce (17, 31) de repérage peut être déplacée pour venir dans des positions de réglage sélectionnées, dans laquelle l'installation a une enveloppe (7) et dans laquelle le dispositif (13, 25) de déplacement forme au moins une voie (13) de guidage, qui se trouve sur l'enveloppe (7), qui s'étend le long d'au moins une partie de la plage d'affichage et le long de laquelle une pièce (17, 31) respective de repérage peut, pour le réglage de la position, être déplacée et être fixée dans des positions de réglage sélectionnées, **caractérisée en ce que** l'enveloppe entoure le tuyau (5) montant, **en ce qu'**une paroi (11) latérale de l'enveloppe (7) a une partie (51) pliée, qui forme un plan (53) décalé d'une paroi (9) avant de l'enveloppe (7) vers des raccords (1, 3) de fluide, plan où est constituée la voie (13) de guidage, **en ce que** la pièce (17, 31) respective de repérage a une partie (19) de liaison, qui peut être réglée en position et fixée sur la paroi (11) latérale concernée le long de la voie (13) de guidage sous la forme d'une fente oblongue, ainsi qu'une partie (21, 33) d'aiguille, qui forme un coude avec la partie (19) de liaison et qui, en recouvrant au moins une partie de la paroi (9) avant, s'étend dans la partie d'un hublot (10) et **en ce que** la partie (19) de liaison a un trou (27), dans lequel pénètre une vis (27) de serrage, qui coopère avec un écrou en T, qui est guidé le long de la fente (13) longitudinale et au moyen duquel la pièce (17) respective de repérage peut être fixée dans la position de réglage souhaitée.

2. Installation suivant la revendication 1, **caractérisée en ce que** la partie (51) pliée a un bord (58) s'étendant à côté de la voie (13) de guidage et coudé dans la direction vers les raccords (1, 3) de fluide.

3. Installation suivant la revendication 1 ou 2, **caractérisée en ce que** la partie (19) de liaison de la pièce (17) respective de repérage a un tronçon (55) s'appliquant à la paroi (11) latérale associée et un tronçon (57) qui en est coudé et qui s'applique au plan (53) de la voie (13) de guidage.

4. Installation suivant l'une des revendications précédentes, **caractérisée en ce que** dans le tuyau (5) montant est guidé avec possibilité de se déplacer, un corps (41) flottant et **en ce qu'**il est prévu au moins un dispositif (43) de capteur, qui en reconnaît la position et qui peut être réglé en position le long de la voie (13) de guidage d'une paroi (11) latérale respective et y être fixée.
